# EUROPEAN PATENT APPLICATION

(11) **EP 0 761 725 A2**
(43) Date of publication of application: **12.03.1997**
(21) Application number: 96114246.0
(22) Date of filing: 05.09.1996
(51) Int. Cl.: C08J 7/04

(54) **Laminated polyester film**

(30) Priority: 11.09.1995 JP 232487/95
(71) Applicant: DIAFOIL HOECHST CO., LTD, Bunkyo-ku Tokyo (JP)
(72) Inventor: Fujita, Masato, Nagahama-shi, Shiga-ken (JP)
(74) Representative: TER MEER - MÜLLER - STEINMEISTER & PARTNER

(57) **Abstract**

The present invention relates to a laminated polyester film comprising:
a polyester film as a based film, and
at least one anti-static layer laminated on said polyester film,
said anti-static layer comprising an anti-static resin having (i) a poly(alkylene oxide) unit and a phenylene sulfonic acid group, (ii) poly(alkylene oxide) unit and a phenylene sulfonate group, or (iii) a poly(alkylene oxide) unit, a phenylene sulfonic acid group and phenylene sulfonate, and
said laminated polyester film being oriented at least one direction.

## Description

### BACKGROUND OF THE INVENTION

The present invention relates to a laminated polyester film. More particularly, the present invention relates to a laminated polyester film having excellent transparency, adhesion and antistatic properties.

Since a biaxially oriented polyester film shows excellent properties in many facets such as mechanical properties, electrical properties, dimensional stability, transparency and heat resistance, it has been widely used as a base film for various commercial products such as magnetic recording materials, packaging materials, electrical insulators, various kinds of photographic materials, graphic arts, etc.

This biaxially oriented polyester film, however, has the disadvantages such as poor adhesion property and easily charging by a frictional force because the film surface has a high degree of crystalline orientation. Many proposals have been made for overcoming these problems. For instance, in order to improve adhesiveness of the film, it has been tried to apply physical treatments such as corona discharge treatment, plasma treatment, ultraviolet irradiation treatment, etc., under various gaseous atmospheres or chemical treatments by use of alkalis, trichloroacetic acid, amines, phenols, etc., or combinations of such physical and chemical treatments, on the film surface. However, any of these methods had some defect or other such as inability to provide desired adhesiveness or liability to reduction of the effect of the treatment with the passage of time.

Recently, it has been found effective and practiced widely to form a primer layer on the polyester film surface in order to impart good adhesion property thereto. Particularly, the method in which primer coating treatment is conducted during the polyester film forming process (in-line coating method) is used popularly because of simplified process, production cost, environmental effect, etc. For such primer coating, there can be used, for instance, the polyester resins having organic sulfonate groups (Japanese Patent Application Laid-Open (KOKAI) No. 58-1727) and mixtures of the polyester resins having organic polysulfonate groups and anionic urethane resins (Japanese Patent Application Laid-Open (KOKAI) No. 58-78761) which are particularly useful for improving adhesion property of the polyester films. Also, for imparting antistatic properties to the polyester films, the methods of adding an antistatic agent to the composition (Japanese Patent Application Laid-Open (KOKAI) No. 60-141525) or method of coating a styrene-sulfonic acid copolymer on the surface of the polyester film (Japanese Patent Application Laid-Open (KOKAI) No. 61-204240) have been proposed.

The conventional techniques mentioned above, however, have the following problems. For instance, in case where a polyester having sulfonate groups is used for forming an adhesion layer of a film, even if desired adhesion property could be obtained, the formed coating layer has sufficient antistatic property because of insufficient content of sulfonate groups, so that dust occurring in the step tends to be attached during the step of forming a coating layer such as a recording layer, etc. on the adhesion layer and a high-precision coating layer cannot be obtained.

Also, in the method of adding an antistatic agent, since the antistatic agent itself is composed of a surfactant, it tends to bleed out on the film surface. Therefore, although the desired antistatic effect could be obtained, there is a problem in imparting adhesion to the film surface. In the case of the method comprising coating a styrene-sulfonic acid copolymer on the film surface, although the desired antistatic effect as well as adhesion and slip properties are obtained, the styrene-sulfonic acid copolymer itself is poor in stretching conformability, so that when this method is applied to in-line coating, there may take place cracking in the coating film, thereby to deteriorating a film transparency.

It has thus been hardly possible with the prior art to obtain a laminated polyester film which has excellent transparency, adhesion and antistatic properties and can still maintain these excellent properties even when produced by using the in-line coating method.

As the present inventor's earnest study for solving the above-mentioned problem, it has been found that by laminating an antistatic layer comprising an antistatic resin having at least poly(alkylene oxide) unit and phenylene sulfonic acid and/or phenylene sulfonate group on a polyester film as a base film, the obtained polyester film is excellent in transparency, adhesion and antistatic properties. The present invention is attained on the basis of this finding.

### SUMMARY OF THE INVENTION

An object of the present invention is to provide a laminated polyester film which has excellent transparency, adhesion and antistatic properties and which is not affected in transparency even when in-line coating techniques are employed in producing the film.

To accomplish the aims, in an aspect of the present invention, there is provided a laminated polyester film comprising:
a polyester film as a based film, and
at least one anti-static layer laminated on said polyester film,
said anti-static layer comprising an anti-static resin having (i) a poly(alkylene oxide) unit and a phenylene sulfonic acid group, (ii) poly(alkylene oxide) unit and a phenylene sulfonate group, or (iii) a poly(alkylene oxide) unit, a phenylene sulfonic acid group and phenylene sulfonate, and
said laminated polyester film being oriented at least one direction.

### DETAILED DESCRIPTION OF THE INVENTION

A detailed explanation of the present invention is described as follows.

The "polyester" in the polyester film used as base film in the present invention refers generically to polymers in which ester linkage constitutes a principal portion of the main chain connection. The particularly preferred polyesters for use in the present invention are polyethylene terephthalate, polyethylene-2,6-naphthalate, polybutylene terephthalate and the like. When the factors such as quality and economy are considered synthetically, polyethylene terephthalate is more preferred. So, in the following description of the invention, polyethylene terephthalate is taken up as typical example of the polyesters usable in the present invention, but obviously the polyesters usable in the present invention are not restricted to polyethylene terephthalate.

Polyethylene terephthalate is a polyester of which usually 80 mol% or more, preferably 90 mol% or more of the repeating units is constituted by ethylene terephthalate. The other dicarboxylic acid(s) and diol(s) may be copolymerized with ethylene terephthalate in amount of less than 20 mol% as far as the above defined structure can be maintained. Also, various known additives such as heat stabilizer, oxidation stabilizer, weathering stabilizer, ultraviolet absorber, organic lubricant, pigment, dye, organic or inorganic fine particles, nucleating agent, etc., may be added to the polyesters within limits not prejudicial to the effect of the present invention. These additives may be used in admixture of two or more of them, if necessary.

The intrinsic viscosity of polyethylene terephthalate used in the present invention (as measured in orthochlorophenol at 25°C) is preferably in the range from 0.40 to 1.20 dl/g, more preferably from 0.50 to 0.80 dl/g.

The thickness of the polyethylene terephthalate film as base film in the present invention is not critical and can be properly determined according to the purpose of use, but usually it is in the range from 1 to 500 µm.

The antistatic layer provided on at least one side of the polyester film of the present invention needs to be stretched at least monoaxially with polyester film as a base film. By the stretching, the adhesion of the antistatic layer to the base polyester film and uniformity of the antistatic layer are improved, and also the excellent antistatic property is provided to the laminated film.

The antistatic layer provided on at least one side of the polyester film of the present invention comprises an antistatic resin having poly(alkylene oxide) unit and phenylene sulfonic acid and/or phenylene sulfonate groups in the side chain. The "antistatic resin" referred to the present invention may be defined as a resin whose surface resistivity is not more than 1 x 10¹⁴ Ω, preferably not more than 1 x 10¹² Ω, more preferably not more than 1 x 10¹⁰ Ω under the normal temperature and humidity conditions (23°C and 50% RH), and when a resin satisfies such a requirement, it is called "a resin having antistatic property" in the present invention.

The antistatic resin composition having poly(alkylene oxide) unit and phenylene sulfonic acid and/or phenylene sulfonate groups in the side chain in the antistatic layer of the present invention contains poly(alkylene oxide) unit and phenylene sulfonic acid and/or phenylene sulfonate groups in any one of the monomer units constituting the resin. Such a resin is obtained by copolymerizing monomer A(s) having poly(alkylene oxide) unit and phenylene sulfonic acid and/or phenylene sulfonate groups in the side chain, but other methods may also be used for obtaining this resin.

The poly(alkylene oxide) unit-containing monomer constituting a component of the one of monomer A has at least a reactive unsaturated double bond of vinyl, acrylic, methacrylic, allyl or methallyl type group(s) and has at least a poly(alkylene oxide) unit represented by the following formula; 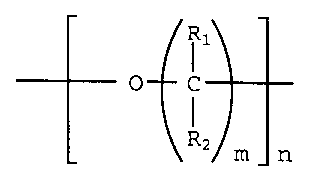 where m≥1, n≥2, and R₁ and R₂ are independently hydrogen or alkyl group.

In the above formula, n is 2≤n, preferably 3≤n, more preferably 4≤n≤50. In m, 1≤m is preferable and 1≤m≤5 is more preferable. It is still more preferable to contain m=2 and most preferable to contain continuous unit of m=2 in poly(alkylene oxide) unit. R₁ and R₂ are independently hydrogen or alkyl group, preferably hydrogen or methyl group, more preferably hydrogen.

Examples of such monomers include, but are not limited to, polyethylene glycol monomethacrylate, polyethylene glycol monoacrylate, methoxypolyethylene glycol monomethacrylate, polypropylene glycol monomethacrylate, polyethylene glycol monoacrylate, polyethylene glycol-polypropylene glycol monomethacrylate, polyethylene glycol-polytetramethylene glycol monomethacrylate, polyethylene glycol-polypropylene glycol monoacrylate and polypropylene glycol-polytetramethylene glycol monomethacrylate.

By the incorporation of a monomer A having poly(alkylene oxide) unit such as mentioned above in an antistatic resin through copolymerization, it is possible to obtain a laminated film having excellent adhesion property, antistatic properties and stretchability.

As another component of the monomer A, there can be used any monomer having reactive unsaturated double bonds of a vinyl, acrylic, methacrylic, allyl or methallyl type group(s) and also having phenylene sulfonic acid or phenylene sulfonate groups in the side chain.

The phenylene sulfonic acid or phenylene sulfonate groups-containing monomer is preferably a monomer containing styrene sulfonic acid or styrene sulfonate groups, or α-methylstyrene sulfonic acid or sulfonate groups.

Examples of the monomers having phenylene sulfonic acid or phenylene sulfonate groups include, but are not limited to, styrenesulfonic acid group, styrene sulfonate group, α-methylstyrenesulfonic acid group, α-methylstyrene sulfonate group, methacryloylphenylsulfonic acid group, methacryloyl phenylsulfonate group, vinylphenylsulfonic acid ether group, and vinylphenylsulfonate ether group.

The monomers having phenylene sulfonic acid or phenylene sulfonate groups mentioned above may be used anyone singly, in combination or in combination with other sulfonic acid or sulfonate groups-containing monomer such as vinylsulfonic acid group, vinyl sulfonate group, allylsulfonic acid group, allyl sulfonate group, methallylsulfonic acid group, methallyl sulfonate group, methacryloylethylsulfonic acid group, methacryloyl ethylsulfonate group, vinylethylsulfonic acid ether group, vinylethylsulfonate ether group, butadiene-2-sulfonic acid group or butadiene-2-sulfonate group.
Especially, a combination comprising not less than 20 mol% of styrene sulfonic acid and not more than 80 mol% of methallyl sulfonic acid and/or allyl sulfonic acid is preferable. By using of a resin obtained by copolymerizing these monomers, a laminated film with excellent antistatic properties can be used.

By using a resin obtained by copolymerizing these monomers, a laminated film showing excellent antistatic performance particularly under low humidities below 40% RH can be obtained.

The counter ions of the said phenylene sulfonate groups can be properly selected from the monovalent metallic ions such as sodium ion, potassium ion and lithium ion or the monovalent organic ions such as ammonium ion and amine (primary, secondary, tertiary, etc.) ion, but usually alkali metal ions or ammonium ion, especially sodium ion, potassium ion or ammonium ion are preferred.

The antistatic resin used in the present invention may be synthesized by copolymerizing the said monomer A and a monomer B copolymerizable therewith. The monomer B preferably contains an amino group, and it is possible to use any amino group-containing monomer which has an amino group or an alkylolated amino group in the side chain and also has reactive unsaturated double bonds of vinyl, acrylic or methacrylic groups.

As the monomer having an amino group or an alkylolated amino group, there can be used, for example, those monomers which have as their base an acrylate, methacrylate, vinyl compound or α-substituted vinyl compound and also contains an amino group. The said amino group or alkylolated amino group is preferably primary, secondary or tertiary amino group, more preferably secondary or tertiary amine group. The amino group can be also used as a crosslinkable functional group. Exemplary of the monomers having such a functional group are N,N-dimethylaminoethyl methacrylate, N,N-diethylaminoethyl methacrylate, 2-aminoethyl methacrylate, 2-aminoethyl acrylate, 3-aminopropyl methacrylate, 3-aminopropylacrylate, 2-aminobutyl methacrylate, 2-aminobutyl acrylate, N,N-dimethylaminoethyl vinyl ether, N,N-diethylaminoethyl vinyl ether, 2-aminoethyl vinyl ether, 3-aminopropyl vinyl ether, 2-aminobutyl vinyl ether, and those monomers in which the said amino group has been methylolated. The monomers usable in the present invention are not limited to those mentioned above.

By using the antistatic resin obtained from these amino group-containing monomers, there can be obtained a laminated film having good adhesion, especially high adhesion to the coating layer formed from a coating solution containing an organic solvent (magnetic layer, oxidation curing type ink layer, etc.) and ultraviolet curing type coating layers (UV hardened coat layer, UV curing ink layer, etc).

Known substances can be used as another component of the monomer B constituting the antistatic resin of the present invention. The monomer B has a reactive unsaturated double bonds of vinyl, acrylic, methacrylic, allyl or methallyl type group(s) (whose side chain group may be methyl, ethyl, n-propyl, isopropyl, lauryl, stearyl, cyclohexyl, phenyl, substituted phenyl, etc.). The said resin may have a structure copolymerized therein with a monomer such as mentioned below for the purpose of providing a crosslinkable functional group such as, for example, carboxyl, methylol, acid anhydride, phosphoric, phosphoric ester, amide, methylolated amide, hydroxyl, epoxy, etc.

Examples of the monomers having the said functional groups include, but are not limited to, methyl acrylate, methyl methacrylate, ethyl methacrylate, ethyl acrylate, n-propyl methacrylate, n-propyl acrylate, isopropyl methacrylate, isopropyl acrylate, n-butyl methacrylate, n-butyl acrylate, isobutyl methacrylate, isobutyl acrylate, t-butyl methacrylate, t-butyl acrylate, 2-ethylhexyl methacrylate, 2-ethylhexyl acrylate, lauryl methacrylate, lauryl acrylate, stearyl methacrylate, stearyl acrylate, cyclohexyl methacrylate, cyclohexyl acrylate, phenyl methacrylate, phenyl acrylate, styrene, α-methylstyrene, methyl vinylketone, butyl vinyl ether, vinyl chloride, vinylidene chloride, vinyl pyridine, vinyl pyrrolidone, vinyl acetate, acrylic acid, methacrylic acid, itaconic acid, maleic acid, fumalic acid, crotonic acid, acrylate, methacrylate, itaconate, maleate, fumarate, crotonate (the counter ions forming these salts being alkali metal ion, ammonium ion, etc.), acrylamide, methacrylamide, N-methylmethacrylamide, N-methylacrylamide, methylolated acrylamide, methylolated methacrylamide, β-hydroxyethyl methacrylate, β-hydroxyethyl acrylate, β-hydroxypropyl methacrylate, β-hydroxypropyl acrylate, β-hydroxyvinyl ether, 5-hydroxypentyl methacrylate, 5-hydroxypentyl acrylate, 5-hydroxypentyl vinyl ether, 6-hydroxyhexyl methacrylate, 6-hydroxyhexyl acrylate, 6-hydroxyhexyl vinyl ether, glycidyl methacrylate, and glycidyl acrylate.

Other compounds, such as acrylonitrile, methacrylonitrile, mono- or di-alkyl esters of maleic and itaconic acids, alkoxysilanes having vinyl groups and the like, may also be used as copolymer components.

The antistatic resin used in the present invention can be prepared by copolymerizing the said monomers at appropriate proportions.

The compositional percentage of the monomer having phenylene sulfonic acid and/or phenylene sulfonate group in the copolymer is not specified in the present invention, but it is preferable that the unit content of the said monomer is not less than 5% by weight, more preferably not less than 10% by weight, most preferably 20 to 90% by weight for imparting excellent antistatic properties to the produced film. If the monomer unit content is less than 5% by weight, sufficient antistatic property may not be obtained.

The percentage of the monomer having poly(alkylene oxide) unit is also not specified, but the unit content of this monomer is preferably not less than 10% by weight, more preferably not less than 20% by weight, most preferably 30 to 95% by weight for imparting excellent antistatic property, transparency and adhesion property to the film. If the monomer unit content is less than 10% by weight, sufficient antistatic and adhesion properties may not be obtained.

The percentage of the monomer having amino group is also not specified, but the unit content of this monomer is preferably less than 85% by weight, more preferably 5 to 85% by weight, most preferably 10 to 85% by weight for imparting excellent antistatic and adhesion properties to the film. If the monomer unit content is more than 85% by weight, sufficient adhesion may not be obtained.

The phenylene sulfonate group may be properly selected from groups formed by the addition of monovalent cations, and alkali metal ions such as lithium, sodium and potassium ions or ammonium ions are preferred for imparting sufficient antistatic properties to the film.

The GPC-determined molecular weight of the antistatic resin used in the present invention is preferably not less than 10,000, more preferably not less than 50,000, most preferably 100,000 to 1,000,000 in terms of weight average molecular weight, for imparting the sufficient adhesion to the film. If the weight average molecular weight is less than 10,000, sufficient adhesion property may not be obtained.

In case of copolymerizing a monomer having a crosslinkable functional group such as amino group, it is preferred to add a crosslinking agent reactable with the functional group, for example, a melamine compound and a resin, a compound having a block isocyanate group and a polymer, an epoxy compound and an epoxy resin, an oxazoline compound and a resin, an aziridine compound or the like for crosslinking the functional groups.

The antistatic resin used in the present invention can be produced by polymerizing known vinyl-based resins or acrylic resins. In case where a primer layer comprising an antistatic agent is formed by in-line coating, it is preferred to use a resin prepared by such method as emulsion polymerization, suspension polymerization or solution polymerization using water as solvent because it is preferable that the antistatic resin is soluble or dispersible in water.

In preparation of an antistatic resin by the said polymerization method, it is possible to obtain a graft copolymer having in part a polyester or polyurethane skeleton as backbone by carrying out the polymerization reaction in the presence of a known aqueous polyester or aqueous polyurethane in the reaction vessel.

As means for obtaining an antistatic resin used in the present invention, it is preferable to polymerize the monomers having phenylene sulfonic acid or phenylene sulfonate groups such as mentioned above, but this method is not the only means available for the said purpose. It is also possible to obtain an antistatic resin usable in the present invention by sulfonating a resin having phenyl group and poly(alkylene oxide) units in a known way (introduction of sulfonic acid group) or neutralizing the system after sulfonation (introduction of sulfonate group).

The polyethylene oxide unit and phenylene sulfonic acid and/or phenylene sulfonate group constituting the antistatic resin used in the present invention are not subject to any specific restrictions as far as the side chain units of both of them are present in the same polymer, and they may be contained in the different monomers or may be present in the same monomer unit.

In the coating layer of the film according to the present invention, known aqueous resins such as aqueous polyesters, aqueous polyurethanes, aqueous acrylic resins, aqueous vinyl resins, aqueous epoxy resins, etc., may be contained as binder within limits not prejudicial to the effect of the present invention. These binder resins are available in the known ways. For example, aqueous polyesters can be obtained from polyvalent carboxylic acids and polyvalent hydroxyl compounds such as mentioned below. Examples of polyvalent carboxylic acids usable for the said purpose include terephthalic acid, isophthalic acid, orthophthalic acid, phthalic acid, 4,4'-diphenyldicarboxylic acid, 2,5-naphthalenedicarboxylic acid, 2,6-naphthalenedicarboxylic acid, 1,4-cyclohexanedicarboxylic acid, 2-potassiumsulfoterephthalic acid, 5-sodiumsulfoisophthalic acid, adipic acid, azelaic acid, sebacic acid, dodecanedicarboxylic acid, glutaric acid, succinic acid, trimellitic acid, trimesic acid, trimellitic anhydride, phthalic anhydride, p-hydroxybenzoic acid, trimellitic acid monopotassium salts and ester-forming derivatives thereof. Examples of polyvalent hydroxyl compounds are ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexanedimethanol, p-xylene glycol, bisphenol A-ethylene glycol addition product, diethylene glycol, triethylene glycol, polyethylene glycol, polypropylene glycol, polytetramethylene glycol, polytetramethylene oxide glycol, dimethylolpropionic acid, glycerin, trimethylolpropane, sodium dimethylolethylsulfonate, and potassium dimethylolpropionate. An aqueous polyester is synthesized by properly selecting one or more of the above-mentioned compounds and subjecting it (them) to polycondensation in the usual way.

As the components of aqueous polyurethanes, there can be used polyols, polyisocyanates, chain lengthening agents and crosslinking agents such as mentioned below. Examples of polyols include polyethers such as polyoxyethylene glycol, polyoxypropylene glycol, polyoxypropylenetriol and polyoxytetramethylene glycol; polyesters such as polyethylene adipate, polyethylene-butylene adipate, polypropylene adipate, polyhexylene adipate and polycaprolactone; acrylic polyols, castor oil and the like. Examples of polyisocyanates include aromatic diisocyanates such as tolylene diisocyanate, phenylene diisocyanate, 4,4'-diphenylmethane diisocyanate, 1,5-naphthalenediisocyanate and xylylene diisocyanate and aliphatic diisocyanates such as hexamethylene diisocyanate, lysine diisocyanate, 4,4'-dicyclohexylmethane diisocyanate and isophorone diisocyanate. Examples of chain lengthening agent or crosslinking agent include ethylene glycol, propylene glycol, butanediol, hexanediol, diethyleneglycol, trimethylolpropane, glycerin, hydrazine, ethylenediamine, diethylenetriamine, 4,4'-diaminodiphenylmethane, 4,4'-diaminodicyclohexylmethane, water, etc. One or more of these compounds are properly selected and subjected to polymerization in the usual way to synthesize an aqueous polyurethane.

As the components of aqueous acrylic resins and aqueous vinyl resins, there can be used, for example, acrylates, methacrylates, vinyl compounds and α-substituted vinyl compounds (examples of the substituents being methyl, ethyl, n-propyl, isopropyl, n-butyl, isobutyl, t-butyl, 2-ethylhexyl, lauryl, stearyl, cyclohexyl, phenyl, substituted phenyl, etc.) as skeletal material, and a monomer or monomers containing a functional group such as mentioned below may be copolymerized therewith for the purpose of providing crosslinkable functional groups. Examples of such functional groups include carboxyl, methylol, acid anhydride, sulfonic acid, phosphoric or phosphoric esters and amides, methylolated amides, hydroxyl, epoxy and the like. These monomers are the same as mentioned before as copolymerizable components of antistatic resins and the said resins can be synthesized in the same way as in the case of the said antistatic resins.

The amount of the said aqueous polyester, aqueous polyurethane, aqueous acrylic resin, aqueous vinyl resin and aqueous epoxy resin is preferably not more than 80% by weight, more preferably 10 to 70% by weight.

Further, in the composition of the present invention, known additives such as heat stabilizer, oxidation stabilizer, weathering stabilizer ultraviolet absorber, organic lubricant, organic or inorganic fine particles, surfactant, wax, etc., may be added within limits not causing any adverse influence on the effect of the present invention. Especially, addition of a crosslinking agent is preferable because it improves adhesion property of the film. Examples of the crosslinking agents usable in this invention include, but are not limited to methylolated or alkylolated urea-type, melamine-type, acrylamide-type and polyamide-type compounds, polyamines, epoxy compounds, oxazoline compounds, aziridine compounds, block isocyanate compounds, silane coupling agents, titanium coupling agents, zircoaluminate coupling agents, metal chilates, organic acid anhydrides, organic peroxides, heat- or light-reactive vinyl compounds, and photosensitive resins. The amount of the said additives in the composition can be properly determined according to the purpose, preferably is not more than 10% by weight.

The coating solution for forming an antistatic layer on the polyester film as a base film of the present invention may contain a small quantity of an organic solvent or solvents for improving dispersibility of the composition in water or for improving the film-forming properties of the composition, as far as water is main medium. It is essential that the organic solvent mixed with water (main medium) is used in an amount range that allows complete dissolution of the solvent in water. Examples of the organic solvents usable for the said purpose include, but are not limited to aliphatic or alicyclic alcohols such as n-butyl alcohol, n-propyl alcohol, isopropyl alcohol, ethyl alcohol and methyl alcohol; glycols such as propylene glycol, ethylene glycol and diethylene glycol; glycol derivatives such as n-butyl cellosolve, ethyl cellosolve, methyl cellosolve and propylene glycol monomethyl ether; ethers such as dioxane and tetrahydrofuran; esters such as ethyl acetate and amyl acetate; ketones such as methyl ethyl ketone and acetone; and amides such as N-methylpyrrolidone. These organic solvents may be used either singly or, if necessary, in admixture of two or more of them.

The thickness of the antistatic coating layer on the polyester film of the present invention is not specified, but it is preferable that the thickness of the antistatic layer on the polyester film after stretched, is in the range of 0.01-2.0 µm, more preferably 0.02-1.0 µm, still more preferably 0.04-1.0 µm.

For applying the said coating solution on a base polyester film, various coating means such as shown in Yuji Harasaki "Coating Systems", Maki Shoten, 1979, for example, reverse roll coater, gravure coater, rod coater, air doctor coater, die coater, etc., can be used.

In the present invention, in order to maximize the effect of the invention, the said coating solution is applied on the base polyester film by using the said coating means before crystalline orientation of the base polyester film is completed, and the laminated film is stretched at least monoaxially, after which crystalline orientation of the polyester film is completed.

If the coating film applied is not stretched after coating, the adhesiveness force between the formed coating layer and the base polyester film may be too weak to use practically.

In order to accomplish film-formation in an industrially advantageous way, it is preferable to conduct coating during the biaxially stretched film-forming process. In a preferred embodiment of such method, an aqueous coating solution containing an antistatic resin of the present invention is applied on one side or both sides of a non-stretched or monoaxially stretched polyethylene terephthalate film, then the obtained coated film is continuously led into an approximately 40-130°C heating zone, and after dried or while being dried, it is stretched in the machine direction and/or the transverse direction. It is also possible to employ a method in which an aqueous coating solution containing an antistatic resin of the present invention is applied on one side or both sides of a biaxially stretched polyethylene terephthalate film, and after dried or while being dried, it is again stretched in the machine direction or in the transverse direction. In still another preferred embodiment, an aqueous coating solution containing an antistatic resin of the present invention is applied on a base film which has been monoaxially stretched in the machine direction, then the coated film is continuously led into an approximately 60-130°C heating zone, and after dried or while being dried, it is further stretched in the direction orthogonal to the initial monoaxial stretching direction and then subjected to a heat treatment. The last method is advantageous in terms of production cost, but the method are not limited to the last method.

Stretching for obtaining the polyester film of the present invention is preferably carried out at 50-180°C, and the film is stretched at least 4 times, preferably 6-30 times in terms of area ratio. The stretched film is usually heat-treated at 150-250°C. The thus treated film is preferably relaxed 0.1-20% in both machine and transverse directions in the maximal temperature zone of heat treatment and/or the cooling zone toward the end of heat treatment.

It is particularly preferable to use a method in which a coating solution is applied on a polyethylene terephthalate film which has been monoaxially stretched 2-6 times in the machine direction by roll stretching at 50-130°C, then after proper drying or while being dried and the said monoaxially stretched film is stretched 2-6 times in the transverse direction at 50-180°C.

When the film is restretched 1.01-1.9 times at 100-230°C in the direction orthogonal to the longitudinal direction (machine direction) of the film before heat treatment, the strength of the film in the transverse direction can be enhanced.

According to this method, it is possible to conduct drying of the coated film simultaneously with stretching and to reduce the coating thickness in accordance with stretch ratio, and a film suited for use as base of polyethylene terephthalate films can be produced at relatively low cost.

In the above process, the coating solution may be applied either on one side alone or on both sides of the polyester film as a base film. In case where the coating solution is applied on one side alone, if necessary, the coating may also be formed on the opposite side of the film with another coating solution of the present invention so as to impart other properties to the polyester film of the present invention. In order to better applicability and adhesion of the antistatic coating layer to polyester the film, the film surface may be subjected to a chemical treatment or discharge treatment before applying an aqueous coating solution containing an antistatic resin of the present invention on the polyester film. Also, for improving surface properties, etc., of the coating layer of the biaxially stretched polyester film of the present invention, a discharge treatment may be applied on the polyester film or on the coating layer thereof before or after formation of the coating layer.

The laminated polyester film obtained in the manner described above has excellent transparency, adhesion and antistatic properties, and is suited for use as a base film for magnetic recording, photography, printing, etc. The above described methods can be advantageously used for obtaining the laminated polyester film of the present invention, but other methods can as well be employed within the embodiments of the present invention.

As described above, the laminated polyester film of the present invention is not be impaired in transparency even if a coat-and-stretch method is applied, and it also shows excellent antistatic property, adhesion enhanced and high mechanical strength, so that its industrial value is high.

### EXAMPLES

The present invention is hereinafter described more particularly by the examples thereof, which examples however are merely intended to be illustrative and not to be construed as limiting the scope of the invention. In the following Examples and Comparative Examples, all "parts" and "%" are by weight unless otherwise noted.

The properties and effect of the film according to the present invention were evaluated by the following methods.

### (1) Surface resistivity

Each specimen was set on a concentric electrode unit "16008A" (trade name, mfd. by Hewlett-Packard Japan, Ltd.) (inner electrode diameter: 50 mm, outer electrode diameter: 70 mm), then a voltage of 100 V was applied thereto and the surface resistivity of the specimen was measured by a high resistance meter "4329A" (trade name, mfd. by Yokokawa Hewlet Packard Co., Ltd.) after one-minute application of the said voltage. The measurements were conducted in an atmosphere of 23°C and 50% RH (standard). Surface resistivity was indicated by common logarithms of the measured values.

In the products of the present invention, the common logarithm of the measured value of surface resistivity is preferably less than 12, more preferably less than 10, so that the products of the present invention can well meet the standard requirement for surface resistivity in practical use.

### (2) Transparency

The haze of the film was measured according to JIS-K6714 using a haze-meter "NDH-300A" (trade name, mfd. by Nippon Denshoku Kogyo Co., Ltd.). A non-coated film with a haze of 1.0% was used as base.

The film of the present invention is less than 2% in haze and suited for practical use.

### (3) Topcoating ink adhesion

A UV curing offset ink "Flash Dry FDOL Indigo APN" (produced by Toyo Ink Mfd. Co., Ltd.) was transferred to a film to a thickness of about 2 µm by an offset printing tester "RI Tester RI-2" (mfd. by Ishikawajima Sangyo Kikai Kabushiki Kaisha (IIM)). The printed film was passed through a UV irradiator "UVC-402/1HN:32/1MH" (mfd. by Ushio Electric Inc.) to cure the ink under the conditions of mercury lamp output of 120 W/cm (MH), line speed of 15 m/min and lamp-film distance of 150 mm, and immediately thereafter, a cellophane adhesive tape peel test was conducted. Ink adhesiveness was evaluated by the area peeled and rated according to the following criterion:
- ○:: no peel
- △:: partly peeled
- X:: entirely peeled

In the film of the present invention, there took place no peel of the topcoating ink, so that the film of the present invention is suited for practical use.

### [Antistatic resin composition]

### [Water-dispersed coating solution]

In the following examples, the aqueous (coating) solutions of the antistatic resins (A) and the binder resins(B) used therewith were prepared in the manners described below.

### Antistatic resin A01

Sodium salt of p-styrenesulfonic acid (40 parts by weight) and polyethylene glycol monomethacrylate (60 parts by weight) were dissolved in distilled water (200 parts by weight), and then 2,2'-azobis(2-amidinopropane) dihydrochloride (0.2 part by weight) was added as polymerization initiator to the solution with stirring while heating it to about 60°C in a flask to form an aqueous solution of an antistatic resin. The polyethylene glycol monomethacrylate used in the above synthesis was of the molecular structure comprising 4-5 continuous alkylene oxide units. The solid concentration of the obtained solution was 10%.

### Antistatic resins A02-A12

The aqueous solutions of the respective antistatic resins were prepared in the same way of the resin A01 solution described above.

The ratios of the monomers used in the syntheses of the respective resins are shown in Table 1.

**Table 1**

| Resin | SSS | PEGM(4) | PEGM(7) | MPEGM(9) | PPGM(9) | DMAEMA |
|---|---|---|---|---|---|---|
| A01 | 40 | 60 | - | - | - | - |
| A02 | 40 | - | 60 | - | - | - |
| A03 | 40 | - | - | 60 | - | - |
| A04 | 40 | - | - | - | 60 | - |
| A05 | 30 | 50 | - | - | - | 20 |
| A06 | 30 | - | 50 | - | - | 20 |
| A07 | 30 | - | - | 50 | - | 20 |
| A08 | 30 | 30 | - | 20 | - | 20 |
| A09 | 100 | - | - | - | - | - |
| A10 | 50 | - | - | - | - | 50 |
| Abbreviations in the above table: SSS: sodium salt of p-styrenesulfonic acid PEGM(4): polyethylene glycol monomethacrylate (n = 4-5) PEGM(7): polyethylene glycol monomethacrylate (n = 7-9) MPEGM(9): methoxypolyethylene glycol monomethacrylate (n = 9) PPGM(9): polypropylene glycol monomethacrylate (n = 9) DMAEMA: N,N-dimethylaminoethyl methacrylate | | | | | | |

### Antistatic resin A11

The procedure for preparation of an aqueous solution of resin A01 was followed except that potassium ions were used as counter ions of sodium salt of p-styrenesulfonic acid to obtain an aqueous solution of antistatic resin A11.

### Antistatic resin A12

The preparation procedure of the resin A01 solution was followed except that ammonium ions were used as counter ions of sodium salt of p-styrenesulfonic acid to obtain an aqueous solution of antistatic resin A12.

### Binder resin (polyester) B01

A water dispersion of an aqueous polyester was obtained from conventional polycondensation of terephthalic acid (35 parts by weight), isophthalic acid (10 parts by weight), 5-sodiumsulfoisophthalic acid (5 parts by weight), ethyleneglycol (40 parts by weight), diethylene glycol (5 parts by weight) and 1,4-butanediol (5 parts by weight).

### Binder resin (polyester) B02

A water dispersion of an amine neutralizate of an aqueous polyester was obtained from conventional polycondensation of terephthalic acid (5 parts by weight), isophthalic acid (35 parts by weight), pyromellitic acid (5 parts by weight), ethylene glycol (10 parts by weight) and neopentyl glycol (40 parts by weight).

### Binder resin (polyurethane) B03

A water dispersion of an aqueous polyurethane was obtained from conventional polycondensation of isophorone diisocyanate, polyester polyol comprising of terephthalic acid, isophthalic acid, ethylene glycol and diethylene glycol, and 2,2-dimethylolpropionic acid (chain lengthening agent).

### Example 1

Chips of polyethylene terephthalate having an intrinsic viscosity of 0.65 were dried well, then melted by heating to 280-300°C and extruded into a sheet from a T die. This sheet was cooled and solidified by winding it round a specular cooling drum with a surface temperature of 40-50°C while employing the static adhesion technique to produce a non-stretched polyethylene terephthalate film. This film was passed through a group of 85°C heated rolls and stretched 3.7 times in the machine direction to produce a monoaxially oriented film. One side of this film was subjected to a corona discharge treatment and a water dispersion of the formulation shown below was coated thereon. After coating, the film, with its end held by a clip, was led continuously to a 100°C heating zone for drying and preheating, then stretched 3.9 times in the width direction and further heated in a 210°C heating zone for 3 seconds to obtain a laminated biaxially oriented polyethylene terephthalate film with a base film thickness of 50 µm and a lamination layer thickness of 0.1 µm. Haze of this polyester film was 1.0%.

### Formulation of coating solution

A water dispersion containing 50 parts by weight of antistatic resin A01 of the above-shown composition and 45 parts by weight of polyester resin B01 of the above-shown composition was formed, and 5 parts by weight of colloidal silica was added thereto to prepare a water-dispersed coating solution. The solids concentration of this coating solution was 10% by weight.

### Examples 2-14 and Comparative Examples 1-4

The procedure of Example 1 was followed except for use of the coating solutions (each containing 5 parts by weight of colloidal silica) of the compositions shown in Table 2 to obtain the laminated biaxially oriented polyethylene terephthalate films with the corresponding lamination layer thicknesses.

**Table 2**

| | Antistatic resin | Binder resin | Epoxy | Coating thickness (µm) |
|---|---|---|---|---|
| Example 1 | A01 = 50 | B01 = 45 | - | 0.1 |
| Example 2 | A02 = 50 | B01 = 45 | - | 0.1 |
| Example 3 | A03 = 50 | B01 = 45 | - | 0.1 |
| Example 4 | A04 = 50 | B01 = 45 | - | 0.1 |
| Example 5 | A05 = 50 | B01 = 45 | - | 0.05 |
| Example 6 | A06 = 50 | B01 = 45 | - | 0.05 |
| Example 7 | A07 = 50 | B01 = 45 | - | 0.05 |
| Example 8 | A08 = 50 | B02 = 45 | - | 0.05 |
| Example 9 | A11 = 50 | B03 = 45 | - | 0.1 |
| Example 10 | A12 = 50 | B03 = 45 | - | 0.1 |
| Example 11 | A01 = 95 | - | - | 0.05 |
| Example 12 | A05 = 95 | - | - | 0.05 |
| Example 13 | A05 = 85 | B01 = 10 | - | 0.05 |
| Example 14 | A01 = 85 | - | C01 = 10 | 0.05 |
| Comp. Example 1 | A09 = 95 | - | - | 0.1 |
| Comp. Example 2 | A10 = 95 | - | - | 0.1 |
| Comp. Example 3 | A09 = 50 | B01 = 45 | - | 0.1 |
| Comp. Example 4 | A10 = 50 | B01 = 45 | - | 0.1 |

The coating compositions of the Examples and Comparative Examples are all shown by solids ratios of the respective components, and in each composition 5 parts by weight of colloidal silica is added beside the components shown in the above table.

The obtained results are shown collectively in Table 3.

**Table 3**

| | Transparency Haze (%) | Surface resistivity log ρ s 23°C, 50% RH | Adhesiveness FDOL(Indigo) |
|---|---|---|---|
| Example 1 | 1.2 | 9.5 | ○ |
| Example 2 | 1.3 | 10.4 | ○ |
| Example 3 | 1.2 | 9.8 | ○ |
| Example 4 | 1.3 | 9.7 | ○ |
| Example 5 | 1.2 | 11.4 | ○ |
| Example 6 | 1.1 | 11.3 | ○ |
| Example 7 | 1.2 | 11.1 | ○ |
| Example 8 | 1.2 | 11.7 | ○ |
| Example 9 | 1.0 | 9.7 | ○ |
| Example 10 | 1.2 | 10.0 | ○ |
| Example 11 | 1.1 | '10.2 | ○ |
| Example 12 | 1.1 | 11.4 | ○ |
| Example 13 | 1.2 | 10.7 | ○ |
| Example 14 | 1.3 | 10.8 | ○ |
| Comp. Example 1 | 19.5 | 13.4 | X |
| Comp. Example 2 | 17.4 | 13.0 | X |
| Comp. Example 3 | 11.5 | 12.5 | X |
| Comp. Example 4 | 10.3 | 12.3 | X |

As seen from Table 3, the laminated polyester film of the present invention is excellent in any of transparency, antistatic and adhesion properties.

## Claims

1. A laminated polyester film comprising:
a polyester film as a based film, and
at least one anti-static layer laminated on said polyester film,
said anti-static layer comprising an anti-static resin having (i) a poly(alkylene oxide) unit and a phenylene sulfonic acid group, (ii) poly(alkylene oxide) unit and a phenylene sulfonate group, or (iii) a poly(alkylene oxide) unit, a phenylene sulfonic acid group and phenylene sulfonate group, and
said laminated polyester film being oriented at least one direction.

2. A laminated polyester film according to claim 1, wherein said phenylene sulfonic acid group is styrene sulfonic acid group or α-methylstyrenesulfonic acid group.

3. A laminated polyester film according to claim 1, wherein said phenylene sulfonate group is styrene sulfonate group or α-methylstyrene sulfonate group.

4. A laminated polyester film according to claim 1, wherein said phenylene sulfonate is sodium salt, potassium salt, lithium salt, ammonium salt, primary amine salt, secondary amine salt or tertiary amine salt of sulfonic acid.

5. A laminated polyester film according to claim 1, wherein said poly(alkylene oxide) unit is represented by the following formula: 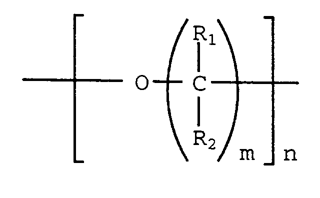 where m≥1, n≥2, and R₁ and R₂ are independently hydrogen or alkyl group.

6. A laminated polyester film according to claim 1, wherein said n is 2 to 50.

7. A laminated polyester film according to claim 1, wherein said m is 2 to 5.

8. A laminated polyester film according to claim 1, wherein said m contains 2.

9. A laminated polyester film according to claim 1, wherein said poly(alkylene oxide) unit contains continuous unit of m=2.

10. A laminated polyester film according to claim 1, wherein R₁ and R₂ are independently hydrogen or methyl group.

11. A laminated polyester film according to claim 1, wherein R₁ and R₂ are independently hydrogen.

12. A laminated polyester film according to claim 1, wherein said anti-static resin has amino or alkylolated amino groups.

13. A laminated polyester film according to claim 1, wherein the weight average molecular weight of said anti-static resin is 10,000-1,000,000.

14. A laminated polyester film according to claim 1, wherein the thickness of said polyester film as a base film is 1 to 500 µm.

15. A laminated polyester film according to claim 1, wherein the thickness of said anti-static layer is 0.01 to 2.0 µm.
